# FASCICULE DE BREVET EUROPEEN

(11) **EP 1 067 841 B1**
(45) Date de publication et mention de la délivrance du brevet: **22.01.2003**
(21) Numéro de dépôt: 99911892.0
(22) Date de dépôt: 07.04.1999
(51) Int. Cl.: A21D 8/04

(54) **UTILISATION DE LIPASE ET/OU DE GLUCOSE-OXYDASE COMME AGENT ANTI-CLOQUAGE DANS LA FABRICATION DE PAIN EN POUSSE CONTROLEE**
VERWENDUNG VON LIPASE UND/ODER GLUKOSE-OXIDASE ZUR VERMEIDUNG VON BLASENBILDUNG IN DER BROTHERSTELLUNG BEI KONTROLLIERER GÄRUNG
USE OF LIPASE AND/OR GLUCOSE-OXIDASE AS ANTI-BLISTERING AGENT IN BREAD PRODUCTION WITH CONTROLLED FERMENTATION

(30) Priorité: 08.04.1998 FR 9804382
(43) Date de publication de la demande: 17.01.2001
(73) Titulaire: Moulins Soufflet, 10400 Nogent sur Seine (FR)
(72) Inventeur: BARET, Jean-Luc, Alain, Guy, F-77250 Veneux les Sablons (FR); CASTELLO, Philippe, Jean-Marie, F-75012 Paris (FR); HUBERT, Christian, André, Ange, F-89100 Sens (FR)
(74) Mandataire: Colas, Jean-Pierre
(86) Numéro de dépôt international: FR9900801
(87) Numéro de publication internationale: WO99052372

(56) Documents cités:
- WO-A-94/04035
- FR-A- 2 690 813
- FR-A- 2 726 434
- PATENT ABSTRACTS OF JAPAN vol. 097, no. 002, 28 février 1997 (1997-02-28) & JP 08 266213 A (KYOWA HAKKO KOGYO CO LTD), 15 octobre 1996 (1996-10-15)

## Description

L'invention concerne l'utilisation de lipase et/ou de glucose-oxydase comme agent anti-cloquage dans la fabrication de pain par un procédé faisant appel à l'emploi d'une chambre à pousse contrôlée ainsi qu'une composition améliorante à base de lipase et/ou de glucose-oxydase.

La fabrication du pain par un procédé faisant appel à l'emploi d'une chambre à pousse contrôlée est bien connue et comporte typiquement les étapes suivantes :
a) un pétrissage de l'ensemble des ingrédients, notamment la farine, le sel, l'eau, et la levure de boulangerie, pour former une pâte,
b) une première fermentation (appelée pointage) de la pâte obtenue en (a),
c) la division, le boulage et le façonnage en pâtons de la pâte fermentée obtenue en (b),
d) le placement des pâtons dans une chambre à température et hygrométrie contrôlées préalablement refroidie entre 0°C et 4°C et leur maintien dans cette chambre afin de bloquer la fermentation pendant un laps de temps désiré,
e) le réchauffement programmé des pâtons à une température de fermentation et l'exécution d'une deuxième fermentation (appelée apprêt) de la pâte des pâtons se terminant à une heure souhaitée, et
f) la cuisson des pâtons.

L'étape de placement des pâtons dans une chambre refroidie bloquant la fermentation pendant une période désirée permet d'alléger considérablement le travail de nuit du boulanger tout en permettant de disposer de pains fraîchement cuits tôt le matin. Elle permet aussi, par une meilleure organisation du travail, d'offrir toute la journée des pains croustillants, venant d'être cuits.

L'inconvénient, toutefois, du procédé de panification à pousse contrôlée est de produire, dans certains cas, des pains dont la croûte présente de nombreuses cloques ou pustules qui nuisent à l'aspect des pains et donc à leur succès commercial.

Il existe donc un besoin pour un moyen qui permettrait de réduire ce problème de cloquage.

La présente invention vise à satisfaire ce besoin.

Selon la présente invention on a trouvé que l'utilisation de lipase et/ou de glucose-oxydase dans la fabrication du pain par un procédé faisant appel à l'emploi d'une chambre à pousse contrôlée, permet de réduire fortement le cloquage de la croûte du pain.

L'emploi de lipase en boulangerie est déjà connu. Par exemple, EP-A-585 988 décrit une composition d'amélioration du pain qui comprend au moins une lipase, au moins une hémicellulase et au moins une amylase. Cette composition est décrite comme améliorant le volume du pain et la souplesse de la mie et est utile en tant que substitut des émulsifiants classiquement utilisés.

US-A-3 368 903 décrit une préparation à base de lipase en tant qu'agent anti-rassissement pour le pain.

EP-A-659 049 décrit l'emploi de lipase pour améliorer les propriétés d'une pâte et/ou du produit obtenu par cuisson de cette pâte. Les propriétés améliorées sont le volume du produit, la souplesse du produit cuit, la résistance au rassissement, etc... La lipase peut être incorporée à la pâte avec d'autres additifs, tels qu'une hémicellulase, entre autres.

Aucun de ces trois documents n'évoque le problème du cloquage ou pustulage de la croûte du pain dans le procédé de panification à pousse contrôlée.

La nouvelle utilisation de l'invention n'est donc pas décrite, ni suggérée par les documents précités.

JP-A-08 266 213 décrit un agent anti-cloquage contenant une phospholipase C ou une lysophospholipase.

FR-A-2 726 434 décrit un agent anti-cloquage contenant une quantité efficace d'un ou plusieurs sucroesters d'acides gras.

L'invention concerne donc l'utilisation, comme agent anti-cloquage, d'une lipase et/ou d'une glucose-oxydase dans un procédé de fabrication du pain en pousse contrôlée.

De préférence, la lipase est utilisée à raison de 600 à 2000 LU/kg de farine, de préférence de 800 à 1200 LU/kg de farine, et notamment d'environ 1000 LU/kg de farine. L'activité de la lipase est déterminée en utilisant du tributyrate de glycérol en tant que substrat et de la gomme arabique en tant qu'émulsifiant.

1 LU (unité de lipase) est la quantité d'enzyme qui libère 1 µmole d'acide butyrique titrable par minute à 30°C, pH 7,0. Des détails supplémentaires à propos de ce titrage peuvent être obtenus auprès de la Société Novo Nordisk A/S, Bagsvaerd, Danemark.

Bien que l'utilisation de lipases de toutes origines, y compris animale et végétale, soit envisagée dans la présente invention, on préfère utiliser des lipases 1,3-spécifiques provenant de micro-organismes tels que bactéries, levures ou fungi. Les documents précités décrivent des lipases appropriées pour l'utilisation dans la présente invention. Les phospholipases ne conviennent pas dans l'invention.

Avantageusement, la glucose-oxydase est utilisée à raison de 400 à 1500 nKat/kg de farine, de préférence de 500 à 1400 nKat/kg de farine. L'activité de la glucose-oxydase est déterminée en utilisant du glucose en tant que substrat. 1 nKat est le nombre de nanomoles d'oxygène consommé par la glucose-oxydase par seconde lorsqu'elle est mise dans un milieu contenant 220 millimoles d'alpha-glucose par litre dans un tampon acétate à 0,1M et à pH 5,6.

L'invention concerne aussi une composition améliorante comprenant, pour 1 kg de farine, au moins une enzyme choisie dans la classe formée par une lipase à raison de 600 à 2000 LU et une glucose-oxydase à raison de 400 à 1500 nKat, une quantité d'acide ascorbique allant de 0,10 à 0,33 g dans le cas où la composition ne contient pas de glucose-oxydase et de 0,08 à 0,25 g dans le cas où la composition contient de la glucose-oxydase, et 10 à 20 mg d'hémicellulase. De préférence la composition contient 800 à 1200 LU/kg de farine et/ou 500 à 1400 nKat/kg de farine. De préférence, aussi, la quantité d'acide ascorbique est comprise entre 0,18 et 0,33 g/kg de farine (sans glucose-oxydase) et 0,10 à 0,20 g/kg (avec glucose-oxydase).

Avantageusement, la composition peut contenir, en outre, une amylase, par exemple à raison de 1 à 5 FAU ("fungal amylase unit" en anglais) par kg de farine.

On va décrire ci-après les essais expérimentaux ayant conduit à la présente invention.

Dans ces essais on a utilisé les ingrédients du commerce suivants :
- Farine commerciale : "Corde Noire®" ou "Mie Crème®" ou "Baguépi®" (Moulins Soufflet)
- Hémicellulase : Veron® 191 (Rhom), Pentopan Mono®(Novo Nordisk)
- Lipase : Novozym® 677 BG (Novo Nordisk), S80000 (Gist Brocades)
- Glucose-oxydase : Maxazyme® (Gist-Brocades) ayant une activité de 22 nanokatal (en abrégé nKat) par mg de produit
- Amylase : Grindamyl®A1000 (Danisco) ayant une activité de 1 FAU ("fungal amylase unit" en anglais) par mg de produit
- Phospholipase : Lecitase® (Novo Nordisk)
- Levure fraîche (Springer)
- Gluten (Roquette)
- Acide ascorbique (en abrégé AA ci-après) (Merck)

On a également utilisé une composition améliorante classique à base de farine, gluten, lécithine, amylase et acide ascorbique, qui, lorsqu'elle est incorporée à raison de 1% en poids sur la base de la farine, apporte, par rapport à la farine, 0,25% en poids de gluten, 0,035% de lécithine, 0,02% d'acide ascorbique et 0,01% (100 ppm) d'amylase fongique (Fermizyme H410 de GIST-BROCADES).

Dans ces essais on a également eu recours au processus de panification suivant :
A - Pétrissage sur pétrin Artofex®
   - Incorporer dans la cuve du pétrin la farine, la levure, et le gluten éventuel.
   - Ajouter l'eau dans laquelle sont diluées le(s) enzyme(s) et l'AA. La température de l'eau de coulage est ajustée de manière à obtenir une température en fin de pétrissage de 22°C ± 1 :

   - Pétrir à deux vitesses : 4 min. à 40 tr./min.
      17 min. à 75 tr./ Min.
   - Incorporer 44 g le sel 5 minutes avant la fin du pétrissage.
B - Pointage et Façonnage
   - Première fermentation ou pointage 10 minutes à la température du fournil.
   - Diviser la pâte en 5-7 pâtons de 350 g.
   - Bouler 3 pâtons et mettre en forme 2 pâtons.
   - Laisser reposer 20 minutes.
   - Façonner mécaniquement 3 bâtards (à partir des pâtons boulés) et 2 baguettes (à partir des pâtons mis en forme).
C - Blocage et Fermentation
   - Déposer les pâtons dans une chambre de fermentation préalablement refroidie à 0°C.
   - Bloquer la fermentation entre 10 et 46 heures à une température de 0 - 4°C.
      (Afin d'éviter l'assèchement des pâtes, l'hygrométrie de la chambre de fermentation doit être saturante ou bien les pains doivent être recouverts d'un film plastique).
   - Réchauffer la pâte entre 18-20°C et laisser développer la pâte pendant 5h-6h.
D - Cuisson (four à sole)
   - Scarifier les pâtons (3 coups de lame pour les bâtards, 6 coups pour les baguettes).
   - Enfourner en présence d'un excès de vapeur d'eau.
   - Cuire 25 minutes les baguettes et 20 minutes les bâtards à 250°C.
   - Laisser ressuer 1 heure.

L'évaluation des résultats a été conduite comme suit :
- Les volumes de 3-4 pains bâtards sont mesurés expérimentalement à partir d'un volumètre à graines de sésame (préalablement étalonné).
- La qualité de la pâte et des pains (note de pâte et de pain) est évaluée selon la technique décrite dans les méthodes BIPEA (Bureau Interprofessionnel d'Etudes Analytiques, 6-14 Avenue Louis Roche, 92230 GENNEVILLIERS).
- Le nombre de cloques des bâtards et/ou des baguettes est dénombré sur toute la surfaces visible de la croûte.
- Traitement informatique des résultats à l'aide du logiciel Statgraphic plus 2.1 (Statistical Graphics Corps).

### ESSAI 1 : Effet de la lipase

On a préparé cinq pâtes à pain A-E ayant la composition suivante, en parties en poids :
100 parties de farine "Mie Crème",
62 parties d'eau,
2,2 parties de NaCl,
2,5 parties de levure,
1 partie de la composition améliorante classique définie ci-dessus.

0 (témoin), 200, 600, 1000 et 1250 LU de lipase/kg de farine, respectivement, ont été incorporés, en outre, dans les pâtes A à E. La lipase était la Novozym®677BG qui est une lipase 1,3-spécifique produite par le micro-organisme Thermomyces lanuginosus.

La température de la pâte obtenue était de 24°C ± 1.

La durée du blocage était de 36h à 4°C.

La durée de réchauffe et de la fermentation à 20°C était de 6 heures.

Les pains obtenus ont été évalués quant à leur cloquage et à leur volume. Les résultats sont rapportés dans le Tableau 1 suivant :

**TABLEAU 1**

| ***Pâte*** | ***Taux de lipase LU*/*kg de farine*** | ***Nb. de cloques par pain*** | ***Volume moyen*/*pain cm***^{***3***} |
|---|---|---|---|
| A | 0 | 350 | 1830 |
| B | 200 | 200 | 1730 |
| C | 600 | 140 | 1590 |
| D | 1000 | 83 | 1600 |
| E | 1250 | 80 | 1610 |
| Note : chaque valeur est la moyenne de mesures réalisées sur deux séries de fabrication indépendantes, à chaque fois sur 4 pains. | | | |

On voit d'après ces résultats que l'ajout de lipase réduit considérablement le nombre de cloques mais que cette réduction tend à plafonner lorsque le taux de lipase atteint 1000 LU/kg de farine. On voit aussi que l'ajout de lipase tend à réduire le volume du pain résultant, ce qui est indésirable d'un point de vue commercial.

Afin de remédier à cet effet de réduction du volume du pain on a étudié les effets de divers agents améliorants.

### ESSAI 2 : Effets de diverses hémicellulases et d'acide ascorbique

On a étudié les effets de deux hémicellulases disponibles dans le commerce sous les dénominations Veron®191 et Pentopan Mono®, ainsi que d'une autre hémicellulase du commerce du type endoxylanase, sur le cloquage et le volume du pain.

Les pâtes utilisées avaient la composition suivante :
100 parties de farine "Corde Noire",
62 parties d'eau,
2,2 parties de NaCl,
2,5 parties de levure,
0,002 ou 0,008 partie d'acide ascorbique (AA),
0 ou 0,002 partie d'hémicellulase (HC), et
0 ou 1000 LU de lipase (Novozym 677BG) par kg de farine.

La température des pâtes obtenues était de 22°C ± 1.

La durée du blocage était de 40 h à 0 - 2°C.

Le temps de réchauffe et de fermentation à 20°C était de 5h30.

Les pains obtenus ont été évalués quant à leur cloquage et à leur volume. Les résultats sont rapportés dans le tableau 2 suivant :

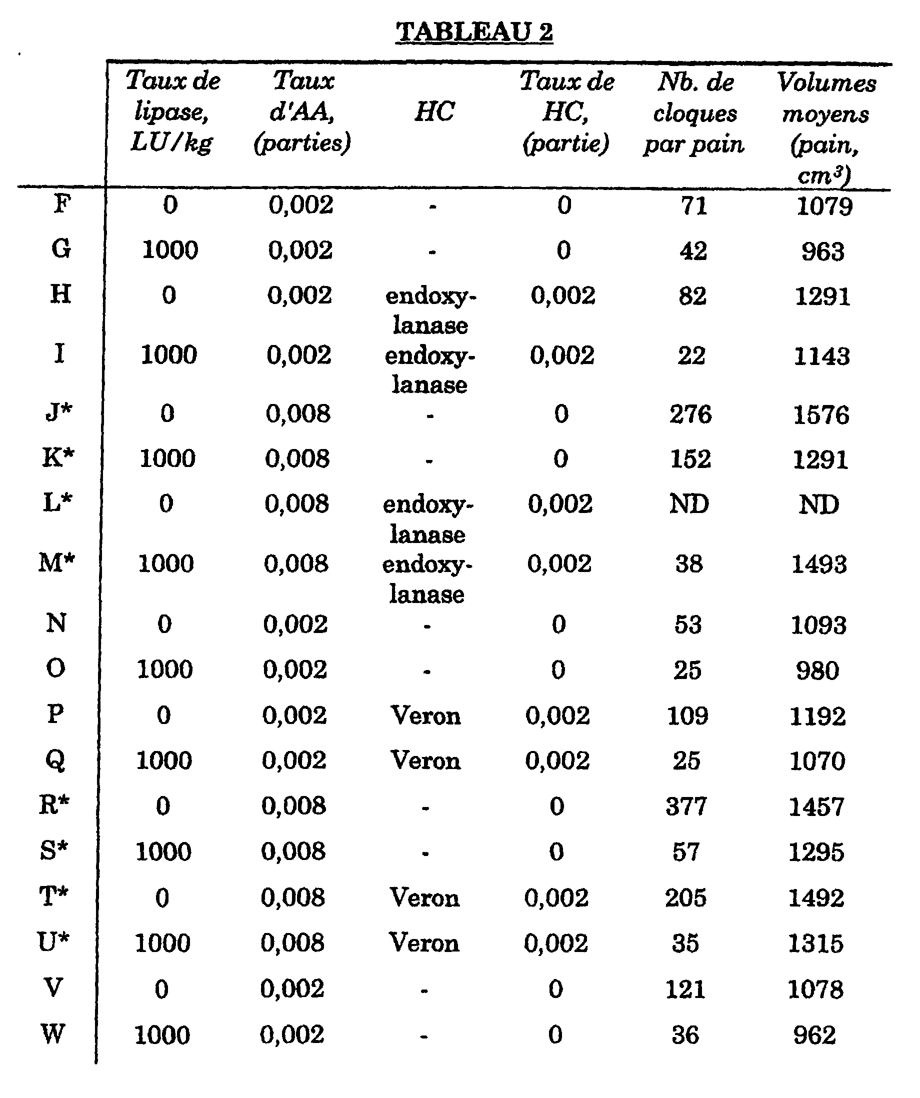

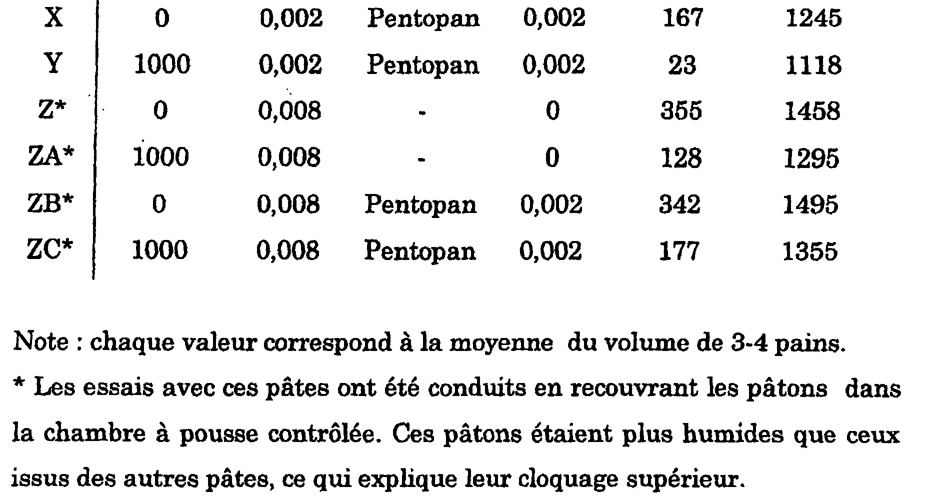

Ces résultats montrent que l'incorporation d'une hémicellulase exerce un effet bénéfique sur le volume du pain. Ils montrent également que le gain en volume croît avec la teneur en acide ascorbique.

### ESSAI 3 : Effet de l'acide ascorbique sur le volume du pain

On a préparé diverses pâtes AA-AI ayant la composition suivante :
100 parties de farine "Corde Noire",
62 parties d'eau,
2,2 parties de NaCl,
2,5 parties de levure,
x parties d'acide ascorbique où x est tel qu'indiqué dans le Tableau 3, et
0 ou 1000 LU de lipase (Novozym 677BG)/kg de farine.

La température des pâtes était de 22°C ± 1.

La durée de blocage était de 42 heures à 0-2°C.

Le temps de réchauffe et de fermentation à 18-20°C était de 6 heures.

Le volume de chaque pain obtenu a été mesuré. Les résultats sont rapportés dans le Tableau 3 ci-dessous.

**TABLEAU 3**

| *Pâte* | *Taux de lipase UL*/*kg* | *x parties* | *Volume moyen*/*pain cm*^{*3*} |
|---|---|---|---|
| AA | 0 | 0,009 | 1310 |
| AB | 0 | 0,013 | 1365 |
| AC | 0 | 0,018 | 1460 |
| AD | 1000 | 0,009 | 1310 |
| AE | 1000 | 0,013 | 1320 |
| AF | 1000 | 0,018 | 1380 |
| AG | 1000 | 0,023 | 1360 |
| AH | 1000 | 0,028 | 1340 |
| AI | 1000 | 0,033 | 1320 |

Ces résultats confirment que l'acide ascorbique permet au moins de compenser la perte de volume qu'entraînerait normalement la présence de lipase.

### ESSAI 4 : Recherche de la dose optimale d'hémicellulase du type endoxylanase

On a préparé des pâtes ayant la composition suivante :
100 parties de farine "Corde Noire",
62 parties d'eau,
2,2 parties de NaCl,
2,5 parties de levure,
0,3 partie de gluten,
0,022 partie d'acide ascorbique,
1000 LU de lipase Novozym 677BG/kg de farine, et
une proportion variable d'hémicellulase du type endoxylanase telle qu'indiqué dans le Tableau 4.

La température des pâtes était de 22°C ± 1.

La durée de blocage était de 40 heures à 0 - 2°C.

Le temps de réchauffage et de fermentation à 18-20°C était de 5-6 heures.

La note de pâte (évaluée par la méthode BIPEA) et le volume de chaque pain obtenu ont été déterminés. Les données et résultats sont récapitulés dans le Tableau 4 ci-dessous.

**TABLEAU 4**

| ***Pâte*** | ***Taux d'hémicellulase parties*** | ***Volume moyen*/*pain cm***^{***3***} | ***Note de pâte*** |
|---|---|---|---|
| AJ | 0 | 1330 | 77,5 |
| AK | 0,001 | 1440 | 77,5 |
| AL | 0,002 | 1590 | 76,5 |
| AM | 0,003 | 1580 | 70 |

Ces résultats montrent qu'une proportion d'hémicellulase de l'ordre de 0,002 partie pour 100 parties de farine constitue la proportion donnant le meilleur compromis entre la note de pâte et le volume final du pain.

### ESSAI 5 : Effet anti-cloquage de diverses lipases

On a préparé des pâtes ayant la composition suivante :
100 parties de farine "Corde Noire",
62 parties d'eau,
2,2 parties de NaCl,
2,5 parties de levure,
0,02 partie d'acide ascorbique, et
des proportions variables de trois lipases du commerce comme indiqué au Tableau 5 ci-dessous.

La température de la pâte était de 22°C ± 1.

La durée de blocage était de 40 heures à 0 - 2°C.

Le temps de réchauffe et de fermentation à 18-20°C était de 5-6 heures.

Le cloquage et le volume des pains obtenus ont été évalués.

Les données et résultats sont récapitulés dans le Tableau 5 ci-après.

**TABLEAU 5**

| *Pâte* | *Type de lipase* | *Taux de lipase LU*/*kg*^{*(1)*} *ou IU*/*kg*^{*(2)*} | *Nb. de cloques*/*pain* | *Volume moyen*/*pain, cm*^{*3*} |
|---|---|---|---|---|
| AN | Novozym 677BG | 0 | 270 | 1450 |
| AO | " | 500⁽¹⁾ | 75 | 1400 |
| AP | " | 1000⁽¹⁾ | 80 | 1320 |
| AQ | " | 2000⁽¹⁾ | 50 | 1270 |
| AR | S80000* | 0 | 250 | 1460 |
| AS | " | 500⁽¹⁾ | 195 | 1380 |
| AT | " | 1000⁽¹⁾ | 130 | 1275 |
| AU | " | 2000⁽¹⁾ | 80 | - |
| AV | Lecitase | 0 | 200 | 1540 |
| AW | " | 500⁽²⁾ | 200 | 1580 |
| AX | " | 1000⁽²⁾ | 250 | 1580 |
| AY | " | 2000⁽²⁾ | 240 | 1570 |

| | | | | |
|---|---|---|---|---|
| * La lipase S80000 est une lipase d'origine fongique (Rhizopus arrhizus) | | | | |

Ces résultats montrent que le Lecitase qui est un phospholipase n'a pas d'effet anti-cloquage, tandis que les deux autres lipases qui sont 1,3-spécifiques présentent une bonne activité anti-cloquage, la Novozym 677BG étant légèrement supérieure à cet égard à la S80000.

### ESSAI 6 : Composition anti-cloquage à base de lipase optimisée

On a préparé, à partir des résultats des essais précédents une composition anti-cloquage optimisée. Cette composition était la suivante :
1000 LU de lipase (Novozym 677BG)/kg de farine,
20 mg/kg de farine d'hémicellulase du type endoxylanase, et
0,2 g/kg de farine d'acide ascorbique.

Cette composition a été utilisée dans la préparation d'une pâte à pain comprenant 1000 g de farine "Corde Noire" ou "Mie Crème", 620 g d'eau, 22 g de NaCl et 25 g de levure. La pâte avait une température de 23°C ± 1°C et a été soumise à un blocage de 36 heures à 0 - 4°C, puis à 5 - 6 heures de réchauffe et fermentation à 18-20°C. Les pains obtenus, ainsi que des pains témoins produits à partir de la même pâte sans la composition améliorante, ont été évalués. Les résultats sont récapitulés dans le Tableau 6 ci-dessous.

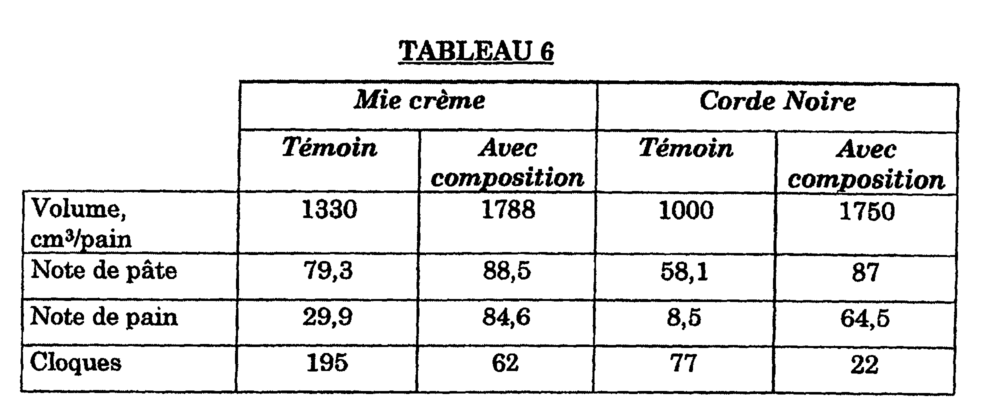

On voit d'après ces résultats que la qualité du pain est améliorée de façon flagrante par l'incorporation de la composition optimisée de l'invention.

### ESSAI 7 : Effet de la glucose-oxydase, avec ou sans addition de lipase

On a préparé huit pâtes à pain BA-BH ayant la composition suivante en parties en poids :
100 parties de farine "Corde Noire",
62 parties d'eau,
2,2 parties de NaCl,
2,5 parties de levure,
0,004 partie d'acide ascorbique
3,5 x 10⁻⁴ partie d'amylase Grindamyl® A1000,
la proportion indiquée dans le Tableau 7 de lipase Novozym®677BG, et
la proportion indiquée dans le Tableau 7 de glucose-oxydase Maxazyme®.

La température de la pâte obtenue était de 22°C ± 1.

La durée du blocage était de 46h à 0,2°C.

La durée de réchauffe et de la fermentation à 20°C était de 6 heures.

Les pains obtenus ont été évalués quant à leur cloquage. Les résultats sont apportés dans le Tableau 7 suivant :

**TABLEAU 7**

| Pâte | Taux de lipase LU/kg de farine | Taux de glucose-oxydase, nKat/kg de farine | nb de cloques par pain |
|---|---|---|---|
| BA (témoin) | 0 | 0 | 720 |
| BB | 1000 | 0 | 250 |
| BC | 0 | 1320 | 270 |
| BD | 100 | 220 | 565 |
| BE | 1000 | 220 | 150 |
| BF | 100 | 1320 | 197 |
| BG | 1000 | 1320 | 106 |
| BH | 500 | 770 | 261 |
| Note : Chaque valeur est la moyenne de mesures réalisées sur deux séries de fabrication indépendantes, à chaque fois sur 3 pains. | | | |

On voit d'après ces résultats que l'ajout de glucose-oxydase, seule ou en combinaison avec une lipase, réduit considérablement le nombre de cloques, la meilleure réduction étant obtenue par utilisation conjointe de ces deux enzymes.

### ESSAI 8:

On a préparé quatre pâtes à pain BI-BL ayant la composition suivante en poids :
100 parties de farine "Baguépi®",
62 parties d'eau,
2,2 parties de NaCl,
2,5 parties de levure,
0,010 partie d'acide ascorbique,
la proportion indiquée dans le Tableau 8 de lipase Novozym®677BG, et
la proportion indiquée dans le Tableau 8 de glucose-oxydase Maxazyme®.

La température de la pâte obtenue était de 22°C ± 1.

La durée de blocage était de 36h à 0,2°C.

La durée de réchauffe et de la fermentation à 20°C était de 5 heures.

Les pains obtenus ont été évaluées quant à leur cloquage. Les résultats sont rapportés dans le Tableau 8 suivant :

**TABLEAU 8**

| Pâte | Taux de lipase LU/kg de farine | Taux de glucose-oxydase, nKat/kg de farine | nb de cloques par pain |
|---|---|---|---|
| BI | 0 | 0 | 1030 |
| BJ | 1000 | 0 | 447 |
| BK | 0 | 1320 | 530 |
| BL | 1000 | 1320 | 274 |
| Note : Chaque valeur est la moyenne de mesures réalisées sur deux séries de fabrication indépendantes, à chaque fois sur 3 pains. | | | |

On voit d'après ces résultats que l'ajout conjoint de lipase et de glucose-oxydase donne là encore la meilleure réduction en terme de nombre de cloques.

Il est à noter que les essais 7 et 8 n'ont pour but que de démontrer que la glucose-oxydase exerce un effet intéressant de réduction du nombre de cloques. Ces essais 7 et 8 ne sont nullement optimisés dans la mesure où les pâtes à pain préparées ne contiennent pas d'hémicellulase et une proportion d'acide ascorbique en dehors de la gamme optimale.

## Revendications

1. L'utilisation, comme agent anti-cloquage, d'au moins une enzyme choisie dans la classe formée par une lipase, autre qu'une phospholipase, une glucose-oxydase et un mélange de celles-ci, dans un procédé de fabrication du pain en pousse contrôlée.

2. L'utilisation selon la revendication 1, **caractérisée en ce que** la lipase est utilisée à raison de 600 à 2000 LU/kg de farine.

3. L'utilisation selon la revendication 1, **caractérisée en ce que** la lipase est utilisée à raison de 800 à 1200 LU/kg de farine.

4. L'utilisation selon la revendication 1, **caractérisée en ce que** la lipase est utilisée à raison de 1000 LU/kg de farine.

5. L'utilisation selon la revendication 1, **caractérisée en ce que** la lipase est 1,3-spécifique.

6. L'utilisation selon la revendication 1, **caractérisée en ce que** la glucose-oxydase est utilisée à raison de 400 à 1500 nKat/kg de farine.

7. L'utilisation selon la revendication 1, **caractérisée en ce que** la glucose-oxydase est utilisée à raison de 500 à 1400 nKat/kg de farine.

8. Composition améliorante comprenant, pour 1 kg de farine, au moins une enzyme choisie dans la classe formée par une lipase, autre qu'une phospholipase, à raison de 600 à 2000 LU, une glucose-oxydase à raison de 400 à 1500 nKat et un mélange de celles-ci, une quantité d'acide ascorbique allant de 0,10 à 0,33g dans le cas où la composition ne contient pas de glucose-oxydase et de 0,08 à 0,25 g dans le cas où la composition contient de la glucose-oxydase, et 10 à 20 mg d'hémicellulase.

9. Composition selon la revendication 8, **caractérisée en ce qu'**elle contient la lipase à raison de 800 à 1200 LU.

10. Composition selon la revendication 9, **caractérisée en ce qu'**elle contient la lipase à raison de 1000 LU.

11. Composition selon la revendication 8, **caractérisée en ce qu'**elle contient la glucose-oxydase à raison de 400 à 1500 nKat/kg de farine.

12. Composition selon la revendication 8, **caractérisée en ce qu'**elle contient la glucose-oxydase à raison de 500 à 1400 nKat/kg de farine.

13. Composition selon l'une quelconque des revendications 8 à 12, **caractérisée en ce qu'**elle contient à la fois de la lipase et de la glucose-oxydase.

14. Composition selon l'une quelconque des revendications 8 à 13, **caractérisée en ce qu'**elle contient, en outre, une amylase.

15. Composition selon l'une quelconque des revendications 8 à 12 ou 14 qui ne contient pas de glucose-oxydase, **caractérisée en ce qu'**elle contient 0,18 à 0,33g d'acide ascorbique par kg de farine.

## Patentansprüche

1. Verwendung als Antiblasenbildner von mindestens einem Enzym aus der Gruppe einer Lipase anders als einer Phosphorlipase, einer Glukose-Oxidase und einer Mischung von diesen bei der Herstellung von Brot zum kontrollierten Treiben.

2. Verwendung nach Anspruch 1, **dadurch gekennzeichnet, dass** die Lipase im Verhältnis von 600 bis 2000 LU pro kg Mehl verwendet wird.

3. Verwendung nach Anspruch 1, **dadurch gekennzeichnet, dass** die Lipase im Verhältnis von 800 bis 1200 LU pro kg Mehl verwendet wird.

4. Verwendung nach Anspruch 1, **dadurch gekennzeichnet, dass** die Lipase im Verhältnis von 1000 LU pro kg Mehl verwendet wird.

5. Verwendung nach Anspruch 1, **dadurch gekennzeichnet, dass** die Lipase 1,3-spezifisch ist.

6. Verwendung nach Anspruch 1, **dadurch gekennzeichnet, dass** die Glukose-Oxidase im Verhältnis von 400 bis 1500 nKat pro kg Mehl verwendet wird.

7. Verwendung nach Anspruch 1, **dadurch gekennzeichnet, dass** die Glukose-Oxidase im Verhältnis von 500 bis 1400 nKat pro kg Mehl verwendet wird.

8. Verbesserte Zusammensetzung enthaltend pro kg Mehl mindestens ein Enzym, das aus der Gruppe einer Lipase anders als einer Phosphorlipase im Verhältnis von 600 bis 2000 LU pro kg Mehl, einer Glukose-Oxidase im Verhältnis von 400 bis 1500 nKat und einer Mischung von diesen gebildet ist, sowie einer Menge von 0,10 bis 0,33 g wirksamer Ascorbinsäure im Fall, dass die Zusammensetzung keine Glukose-Oxidase enthält und 0,08 bis 0,25 g im Fall, dass die Zusammensetzung Glukose-Oxidase enthält, und 10 bis 20 mg Hemicellulase.

9. Zusammensetzung nach Anspruch 8, **dadurch gekennzeichnet, dass** sie Lipase im Verhältnis von 800 bis 1200 LU enthält.

10. Zusammensetzung nach Anspruch 9, **dadurch gekennzeichnet, dass** sie Lipase im Verhältnis von 1000 LU enthält.

11. Zusammensetzung nach Anspruch 8, **dadurch gekennzeichnet, dass** sie Glukose-Oxidase im Verhältnis von 400 bis 1500 nKat pro kg Mehl enthält.

12. Zusammensetzung nach Anspruch 8, **dadurch gekennzeichnet, dass** sie Glukose-Oxidase im Verhältnis von 500 bis 1400 nKat pro kg Mehl enthält.

13. Zusammensetzung nach einem der Ansprüche 8 bis 12, **dadurch gekennzeichnet, dass** sie zusammen Lipase und Glukose-Oxidase enthält.

14. Zusammensetzung nach einem der Ansprüche 8 bis 13, **dadurch gekennzeichnet, dass** sie außerdem eine Amylase enthält.

15. Zusammensetzung nach einem der Ansprüche 8 bis 12 oder 14, welche keine Glukose-Oxidase enthält, **dadurch gekennzeichnet, dass** sie 0,18 bis 0,33 g Ascorbinsäure pro kg Mehl enthält.

## Claims

1. Use, as anti-blistering agent, of at least one enzyme chosen from the class formed by a lipase, other than a phospholipase, a glucose oxidase and a mixture thereof, in a process for making bread under controlled proofing.

2. Use according to claim 1, **characterized in that** the lipase is used in an amount of 600 to 2 000 LU/kg of flour.

3. Use according to claim 1, **characterized in that** the lipase is used in an amount of 800 to 1 200 LU/kg of flour.

4. Use according to claim 1, **characterized in that** the lipase is used in an amount of 1 000 LU/kg of flour.

5. Use according to claim 1, **characterized in that** the lipase is 1,3-specific.

6. Use according to claim 1, **characterized in that** the glucose oxidase is used in an amount of 400 to 1 500 nKat/kg of flour.

7. Use according to claim 1, **characterized in that** the glucose oxidase is used in an amount of 500 to 1 400 nKat/kg of flour.

8. Improving composition comprising, for 1 kg of flour, at least one enzyme chosen from the class formed by a lipase, other than a phospholipase, in an amount of 600 to 2 000 LU, a glucose oxidase in an amount of 400 to 1 500 nKat and a mixture thereof, a quantity of ascorbic acid ranging from 0.10 to 0.33 g in the case where the composition does not contain glucose oxidase and from 0.08 to 0.25 g in the case where the composition contains glucose oxidase, and 10 to 20 mg of hemicellulase.

9. Composition according to claim 8, **characterized in that** it contains the lipase in an amount of 800 to 1 200 LU.

10. Composition according to claim 9, **characterized in that** it contains the lipase in an amount of 1 000 LU.

11. Composition according to claim 8, **characterized in that** it contains glucose oxidase in an amount of 400 to 1 500 nKat/kg of flour.

12. Composition according to claim 8, **characterized in that** it contains the glucose oxidase in an amount of 500 to 1 400 nKat/kg of flour.

13. Composition according to any one of claims 8 to 12, **characterized in that** it contains both lipase and glucose oxidase.

14. Composition according to any one of claims 8 to 13, **characterized in that** it contains, in addition, an amylase.

15. Composition according to any one of claims 8 to 12 or 14 which does not contain glucose oxidase, **characterized in that** it contains 0.18 to 0.33 g of ascorbic acid per kg of flour.
